# EUROPÄISCHE PATENTSCHRIFT

(11) **EP 0 683 119 B1**
(45) Veröffentlichungstag und Bekanntmachung des Hinweises auf die Patenterteilung: **21.01.1998**
(21) Anmeldenummer: 95103292.9
(22) Anmeldetag: 08.03.1995
(51) Int. Cl.: B65G 27/32, B65G 27/20, B06B 1/16

(54) **Vorrichtung zur Einstellung des Schwingverhaltens einer Schwingförderrinne**
Control-device for the vibration-rate of a vibrating spout
Dispositif de réglage du rapport de vibrations d'une goulotte de vibration

(30) Priorität: 17.05.1994 DE 4417162
(43) Veröffentlichungstag der Anmeldung: 22.11.1995
(73) Patentinhaber: Jöst GmbH + Co. KG, 48249 Dülmen (DE)
(72) Erfinder: Kreft, Manfred, D-58300 Wetter (DE)
(74) Vertreter: Patentanwälte Meinke, Dabringhaus und Partner

(56) Entgegenhaltungen:
- EP-A- 0 218 822
- WO-A-83/04403
- DE-A- 4 116 632
- DE-A- 4 219 648
- DE-A- 4 301 367

## Beschreibung

Die Erfindung richtet sich auf eine Schwingförderrinne mit Vorrichtung zur Einstellung des Schwingverhaltens.

Eine gattungsgemäße Vorrichtung ist der DE-PS 972 488 zu entnehmen, in der eine Schwingförderrinne beschrieben ist mit zwei gegenläufig angetriebenen Wellen mit Unwuchten, die von Elektromotoren angetrieben sind. Die Regelung der Antriebsleistung wird dabei z.B. bei Drehstrommotoren durch Spannungsänderung, z.B. regelbare Vorschlagwiderstände oder Transformatoren, vorgenommen, Leistungsänderungen bei Gleichstrommotoren können beispielsweise durch eine Feldregelung erfolgen. Die bekannte Lösung wird als Schwingförderer oder als Sieb eingesetzt.

Aus der DE-34 10 449-C2 der Anmelderin ist es bekannt, eine Unwuchtmasse auf wenigstens einer der Unwuchtwellen durch Drehrichtungsumkehr zwischen einer ersten und einer zweiten Anschlagsposition zu verstellen, so daß es möglich ist, einen Schwingförderer zu bauen, der sowohl vorwärts als auch rückwärts fördern kann.

Die EP-0 511 923-A1 zeigt ein Getriebe mit Phasenlagen der Unwuchtgewichte, die in ihrer Position während des Betriebes in mehreren Stufen verändert werden können, wobei allerdings ein entsprechender mechanischer und elektrischer Aufwand getrieben werden muß.

Wie die bekannten Lösungen zeigen, gibt es im Prinzip zwei Bauarten. Entweder wird mit zwei identischen Unwuchtmotoren oder zwei Unwuchtwellen mit ortsfesten Drehstrommotoren gearbeitet, wobei der Drehsinn der Unwuchtmotoren gegenläufig ist, oder es wird mit zwei Unwuchtantrieben gearbeitet, wobei die Unwuchtwellen über ein Getriebe so miteinander verbunden sind, daß die Unwuchtwellen gegenläufig in einer bestimmten Phasenlage rotieren.

Problematisch kann es sein, wenn bei der ersten Art der in allen Richtungen schwingungsfähig gelagerte Schwingförderer und die Unwuchtmotoren nicht einen gemeinsamen Gesamtschwerpunkt aufweisen, da die Phasenlage der rotierenden Unwuchtgewichte und damit die Fördereigenschaften unter Umständen vom Fördergut negativ beeinflußt werden, so beispielsweise wenn der Schwingförderer nur einseitig beladen ist, zudem muß ein sehr großer Aufwand getrieben werden, um den Schwingwinkel im nachhinein zu verändern. Diese Nachteile weist die zweite Bauart nicht auf, allerdings sind die Getriebelösungen, wie schon erwähnt, häufig konstruktiv sehr aufwendig.

An dieser Stelle sei bemerkt, daß es grundsätzlich aus der DE-41 06 443-A1 bei einer Vibrationsmaschine bekannt ist, Unwuchtwellen im Winkel so zur Senkrechten auf die Horizontalebene, z.B. an einem Vibrationssieb, anzuordnen, wobei bei dieser bekannten Lösung eine Richtungsänderung der Hauptförderungsrichtung nicht beabsichtigt ist. Eine ähnliche Schwingförderrinne ist auch aus der EP-A-0 218 822 bekannt.

Aufgabe der Erfindung ist es, eine gattungsgemäße Schwingförderrinne so weiterzubilden, daß auf der Rinne unterschiedliche Hauptförderrichtungen möglich gemacht werden.

Mit einer Vorrichtung der eingangs bezeichneten Art wird diese Aufgabe gemäß der Erfindung dadurch gelöst, daß die beiden Wellen der Unwuchtantriebe zur Senkrechten auf die Horizontalebene in Richtung der Hauptförderrichtung geneigt angeordnet sind und daß durch einen nicht synchronen Betrieb der Unwuchten wenigstens zwei unter einem spitzen Winkel zueinander verlaufende Hauptförderrichtungen in der Rinne eingestellt werden können.

Mit der Erfindung ist es möglich, eine Förderrinne als eine Art Sortierrinne zu benutzen und auszugestalten, derart, daß je nach Einstellung des Schwingverhaltens der Materialstrom in eine der Hauptförderrichtungen und bei Änderung des Schwingverhaltens in die andere Hauptförderrichtung geleitet wird. Wird die Schwingrinne in drei Bereiche eingeteilt mit einem mittleren Bereich und davon im spitzen Winkel abzweigenden äußeren Randbereichen kann eine Dreifachsortierung vorgenommen werden.

Wird wenigstens ein Bereich als Siebeinrichtung ausgestaltet, läßt sich auch die entsprechende Siebcharakteristik den jeweiligen Bedürfnissen anpassen. So kann durch Beeinflussung des Schwingwinkels die Vertikalbeschleunigung und damit die Verweildauer des Siebgutes auf dem Sieb eingestellt werden. Eine Veränderung des Schwingwinkels macht es möglich, während des Siebens eine Optimierung der Aussiebung zu erreichen.

Aus der DE-41 16 632-A1 ist eine Sensorik zur Ermittlung von Drehrichtungs- und Synchronisationsfehlern bekannt. Eine Einflußnahme auf Änderungen einer Förderrichtung ist dort nicht beschrieben.

Ausgestaltungen der Erfindung ergeben sich aus den Unteransprüchen, wobei darauf hinzuweisen ist, daß aus "Wehrmann, K.: Drehstrommotoren regeln, TR Nr. 23, 6. Juni 1978, S. 5, 7", als Regelmöglichkeiten Spannungssteller und Frequenzumrichter bekannt sind, die Merkmale der Unteransprüche stellen aber eine komfortablere Regelungsmöglichkeit bei einer Vorrichtung dar, die es möglich macht, unterschiedliche Hauptförderrichtungen in einer Schwingförderrinne zu erreichen und damit die Rinne als Trennrinne einzusetzen.

Es hat sich gezeigt, daß das Vorsehen zweier Unwuchtwellen mit einem eigenen Motor die gestellte Aufgabe in vorteilhafter Weise lösen kann in Verbindung mit dem jeweiligen Initiator zur Abtastung der Stellung der Unwuchtgewichte, da die relative Position dieser Unwuchtgewichte zueinander mittels Regelungen über die elektrische Spannung oder Frequenz des Drehstromes in Abhängigkeit der Impulse dieser Initiatoren veränderbar ist, solange bis beide Unwuchtantriebe in einer gewünschten Phasenlage synchron laufen.

Um in der Förderrichtung unabhängig sein zu können, d.h. sowohl Vor- wie auch Rückwärtsförderungen zu ermöglichen, ist es möglich, die beiden Unwuchtantriebe im Schwingförderer-Schwerpunktbereich im geringfügigen Abstand dazu zu betreiben bzw. anzuordnen. Damit ist beispielsweise möglich, eine verzögerte selbständige Synchronisation zu erreichen. Um eine selbständig stabile Phasenlage zu erreichen, weisen beide Antriebsmotoren gleiche Unwuchtgewichte auf, die elektrischen Teile der Motoren weisen gleiche Eigenschaften auf, wobei die Drehrichtung der Motoren entgegengesetzt ist.

Ein nichtsynchroner Betrieb, wie z.B. direkt nach dem Einschalten der Motoren, erzeugt je nach Lage der Unwuchtantriebe eine zusätzliche Schwingung des Schwingförderers rechtwinklig zur eigentlichen Schwingrichtung, insbesondere wenn, wie hier, der Schwingförderer in allen Richtungen frei schwingbar gelagert ist. Durch die zusätzliche Schwingung ergibt sich eine Überlagerung an den Motoren, die eine Wirkung derart hervorruft, daß das eine Unwuchtgewicht eines Motors verzögert, das andere beschleunigt wird. Bei Synchronisation verschwindet die oben erwähnte Zusatzschwingung.

Zur Erzeugung einer in unterschiedlichen Winkeln gerichteten Förderrichtung in der Horizontalebene des Schwingförderers sind die Unwuchtantriebe mit geringfügig rückwärts zur Senkrechten auf die Horizontalebene im Sinne der Hauptförderrichtung geneigt liegenden Achsen derart der Förderrinne zugeordnet, daß eine in der Horizontalebene liegende Schwingung erzeugbar ist, wobei die Unwuchtantriebe zweckmäßig neben der Förderrinne angeordnet werden.

Die Vorrichtung kann daher bei gleicher Bauweise für unterschiedliche Einsatzzwecke und Verwendungen herangezogen werden. So läßt sich eine Trennrinne ausgestalten, bei der beispielsweise in vollautomatischen Gießerei-Betrieben heißer Sand und Sandknollen von den Gußteilen getrennt werden sollen. Dabei ist es bekannt, die Schwingförderer mit einem Siebboden auszurüsten, so daß während des Transportes die Sandknollen zerstört werden, die anfallenden Sandknollen zerrieben werden und gleichzeitig die heißen, in der Regel noch empfindlichen Gußteile weitergefördert werden. Dabei muß darauf geachtet werden, daß die Gußteile an sich nur schwachen Schwingungen zur Vermeidung von Oberflächenschäden ausgesetzt werden dürfen, während die Sandknollen mit höherer Intensität zerrieben werden.

Es ist möglich, eine Trenncharakteristik, die im wesentlichen durch den Schwingwinkel gegeben ist, optimal jedem Gußprogramm anzupassen.

Wie schon weiter oben erwähnt, ist es möglich, eine reversive Schwingförderrinne zu schaffen, d.h. ein Fördermittel, das in beiden Richtungen fördern kann.

Eine weitere Möglichkeit des Einsatzes besteht darin, eine Förderrinne als eine Art Sortierrinne zu benutzen und auszugestalten, wenn die Unwuchtantriebe wirkmäßig neben der Förderrinne angeordnet werden, derart, daß bei einer Stellung des Schwingverhaltens der Mittelbereich vom geförderten Gut durchlaufen wird, während, je nach Stellung der Unwuchten, erreichbar ist, daß einmal zum linken oder zum rechten Randbereich gefördert wird, so daß dort weitere Abgabeelemente vorgesehen sein können.

Schließlich kann die erfindungsgemäße Schwingförderrinne auch als Siebeinrichtung eingesetzt werden, da eine entsprechende Sieb-Charakteristik den jeweiligen Bedürfnissen anpaßbar ist. So kann durch Beeinflussen des Schwingwinkels die Vertikalbeschleunigung und damit die Verweildauer des Siebgutes auf dem Sieb eingestellt werden. Eine Veränderung des Schwingwinkels macht es möglich, während des Siebens eine Optimierung der Aussiebung zu erreichen.

Die Erfindung ist nachstehend anhand der Zeichnung beispielsweise näher erläutert. Diese zeigt in den
- Fig. 1 bis 3: Aufsichten auf vereinfacht wiedergegebene Schwingförderer mit seitlichen angeordneten Unwuchtwellen sowie in
- Fig. 1a: eine vereinfachte Seitenansicht gemäß Pfeil I in Fig. 1.

Ein allgemein mit 1 bezeichneter Schwingförderer weist zwei Unwuchten 2 und 3 mit zugeordneten Elektromotoren 4 und 5 auf, die in den Figuren nur vereinfacht wiedergegeben sind.

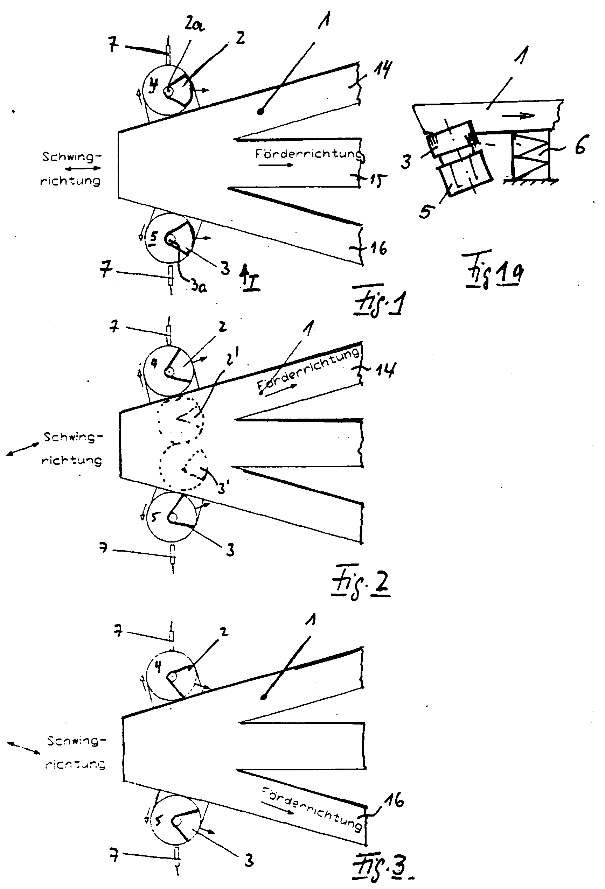

Der Schwingförderer 1 ist in allen Richtungen bewegbar über Federstützen 6 gelagert. Dies ist in Figur 1a angedeutet.

Die Unwuchten 2 bzw. 3 sind an den Elektromotoren 4 bzw. 5 mittels Unwuchtwellen 2a und 3a gelagert, denen, wiederum vereinfacht dargestellt, Sensoren bzw. Initiatoren 7 zugeordnet sind, die die Position der jeweiligen Unwucht 2 bzw. 3 ermitteln können.

Der Schwingförderer 1 weist eine Aufgabeseite 13 und drei Abgaberinnen 14, 15 und 16 auf. Die Unwuchten 2 und 3 mit ihren Unwuchtwellen 2a und 3a sowie den Sensoren 7 sind seitlich neben dem Schwingförderer 1 angeordnet, und zwar in einem leicht schräg geneigten Sinne, wie sich dies aus Fig. 1a ergibt.

Befinden sich die Unwuchtgewichte 2 und 3 in der in Fig. 1 wiedergegebenen Position, ergibt sich die dort wiedergegebene Schwingrichtung, d.h. ein auf der Aufgabeseite 13 aufgegebenes Gut wird durch die mittlere Abgaberinne 15 geführt.

Bei der in Fig. 2 wiedergegebenen Position der Unwuchtgewichte 2 und 3 ergibt sich eine in der Zeichenebene leicht nach oben rechts weisende Förderrichtung, d.h. die Rinne 14 wird beaufschlagt, während sich bei der Position der Unwuchtgewichte 2 und 3 gemäß Fig. 3 eine Förderrichtung nach rechts unten ergibt, was jeweils in den Figuren eingezeichnet ist.

In Fig. 2 ist punktiert angedeutet, daß Unwuchtantriebe auch unterhalb einer derartigen Selektierrinne angeordnet sein können, die beiden Unwuchtgewichte sind dort mit 2' und 3' bezeichnet.

Die Wirkungsweise der Vorrichtung ist dabei im wesentlichen die folgende:

Der auf den Federn 6 gelagerte Schwingförderer wird durch die Unwuchtwellen in Schwingung versetzt, wobei die Sensoren 7 immer dann, wenn sie von den Unwuchtgewichten 2 und 3 überdeckt werden, ein Signal an die Steuerelektronik 12 abgeben. Dabei werden die Unwuchtantriebe gegenläufig betrieben, wie sich dies aus den kleinen Pfeilen in den Fig. 1 bis 3 ergibt.

Erfolgt keine Phasenregelung, laufen die Unwuchten nach einer Anlaufzeit synchron um, die Schwingrichtung ist dann parallel zur Verbindungsgeraden des resultierenden Kraftangriffspunktes der beiden Unwuchtantriebe zum Schwerpunkt der Schwingförderrinne, derart, daß sich keine Förderung ergibt.

Wird beispielsweise der eine Antrieb 4 über einen Frequenzumrichter beeinflußt, während der andere Antrieb 5 unmittelbar am Netz läuft, ergibt sich ein anderes Bild. Eilt z.B. der Unwuchtantrieb 5 dem Antrieb 4 z.B. voraus, wie sich aus Fig. 2 ergibt, was sich beispielsweise durch eine etwas niedrigere Frequenz erreichen läßt, ergibt sich eine in Fig. 2 dargestellte Förderrichtung. Natürlich wäre es auch möglich, die Spannung des Unwuchtantriebes durch einen Spannungssteller etwas zu reduzieren.

Um eine Stabilität der Phasenlage zu erreichen, werden die Signale der Sensoren 7 eingesetzt, um mit Hilfe eines Regelalgorythmusses die Frequenz des Frequenzumformers so anzupassen, daß die Phasenlage stabil bleibt, insbesondere dann, wenn eine einseitige Belastung des Schwingförderers 1, z.B. mit einem schweren Gußteil, die Phasenlage verändern will.

In Fig. 3 ist dargestellt, daß der Unwuchtantrieb 4 dem Unwuchtantrieb 5 vorauseilt. Hier ergibt sich eine Änderung der Förderrichtung. Die elektronische Steuerungseinrichtung 12 stellt sicher, daß beide Unwuchtantriebe mit der gleichen Frequenz umlaufen, wobei zur Messung der Impulse die Sensoren 7 eingesetzt werden. Durch geringfügiges Verändern der Frequenz des Frequenzumrichters kann vom elektronischen Regler jede gewünschte Phasenlage eingestellt werden.

## Patentansprüche

1. Schwingförderrinne (1) Vorrichtung zur Einstellung des Schwingverhaltens, die von zwei von je einem Elektromotor (4,5) gegenläufig angetriebenen Wellen (2a,3a) mit Unwuchten (2,3) beeinflußt wird, die von einer elektronischen Steuereinheit über die Antriebsleisten der Antriebsmotoren (4,5) zueinander eingestellt werden, wobei
die beiden Wellen (2a,3a) der Unwuchtantriebe (2,3) zur Senkrechten auf die Horizontalebene in Richtung der Hauptförderrichtung geneigt angeordnet sind und durch einen zeitlich begrenzten nicht synchronen Betrieb der Unwuchten wenigstens zwei unter einem spitzen Winkel zueinander verlaufende Hauptförderrichtungen in der Rinne eingestellt werden können.

2. Schwingförderrinne (1) nach Anspruch 1,
dadurch gekennzeichnet,
daß zur Beeinflussung der Arbeitsleistung über die Spannung insbesondere ein Spannungsteiler und/oder über die Frequenz insbesondere ein Frequenzumrichter bei einem Drehstrom-Synchronmotor vorgesehen ist.

3. Schwingförderrinne (1) nach Anspruch 1 oder 2,
dadurch gekennzeichnet,
daß zur Ermittlung der Stellung der Unwuchten (2,3) über jeder Welle zugeordnete Sensoren (7) vorgesehen sind.

## Claims

1. An oscillating conveyor trough (1) with apparatus for adjusting the oscillation behaviour, the oscillation trough being influenced by two shafts (2a, 3a) driven in opposite relationship by respective electric motors (4, 5) and having unbalances (2, 3) which are adjusted relative to each other by an electronic control unit by way of the drive output of the drive motors (4, 5), wherein the two shafts (2a, 3a) of the unbalance drives (2, 3) are arranged inclinedly relative to the normal to the horizontal plane in the direction of the main conveyor direction and at least two main conveyor directions which extend at an acute angle relative to each other in the trough can be adjusted by time-limited non-synchronous operation of the unbalances.

2. An oscillating conveyor trough (1) according to claim 1 characterised in that to influence the output by way of the voltage there is provided in particular a voltage divider and/or by way of the frequency there is provided in particular a frequency converter in the case of a three-phase synchronous motor.

3. An oscillating conveyor trough (1) according to claim 1 or claim 2 characterised in that there are provided sensors (7) associated with each shaft to detect the position of the unbalances (2, 3).

## Revendications

1. Goulotte de convoyage vibrante (1) équipée d'un dispositif de réglage du comportement vibratoire, influencé par deux arbres (2a, 3a) entraînés dans des directions opposées, par un moteur électrique respectif (4, 5), et munis de balourds (2, 3) réglés l'un vis-à-vis de l'autre par une unité de commande électronique, par l'intermédiaire des barrettes d'entraînement des moteurs d'entraînement (4, 5), goulotte dans laquelle
les deux arbres (2a, 3a) des entraînements (2, 3) des balourds sont agences, dans le sens de la direction de convoyage principale, avec inclinaison par rapport à la perpendiculaire au plan horizontal ; et au moins deux directions de convoyage principales s'étendant mutuellement selon un angle aigu peuvent être réglées, dans la goulotte, suite à un fonctionnement des balourds non synchrone, limité dans le temps.

2. Goulotte de convoyage vibrante (1) selon la revendication 1,
caractérisée par le fait
qu'un diviseur de tension et/ou un mutateur de fréquence, en présence d'un moteur synchrone à courant triphasé, est notamment prévu pour influencer la puissance de travail par l'intermédiaire de la tension, respectivement par l'intermédiaire de la fréquence.

3. Goulotte de convoyage vibrante (1) selon la revendication 1 ou 2,
caractérisée par le fait
que des capteurs (7), associés à chaque arbre, sont prévus pour déterminer la position des balourds (2, 3).
